# EUROPÄISCHE PATENTSCHRIFT

(11) **EP 3 923 193 B1**
(45) Veröffentlichungstag und Bekanntmachung des Hinweises auf die Patenterteilung: **27.03.2024**
(21) Anmeldenummer: 20179634.9
(22) Anmeldetag: 12.06.2020
(51) Int. Cl.: G06F 18/2413, G06V 10/774, G06V 10/776

(54) **MESSUNG DER EMPFINDLICHKEIT VON BILDKLASSIFIKATOREN GEGEN VERÄNDERUNGEN DES EINGABEBILDES**
MEASUREMENT OF SENSITIVITY OF IMAGE CLASSIFIERS AGAINST CHANGES IN THE INPUT IMAGE
MESURE DE LA SENSIBILITÉ DE CLASSIFICATEURS D'IMAGE PAR RAPPORT AUX CHANGEMENTS DE L'IMAGE D'ENTRÉE

(43) Veröffentlichungstag der Anmeldung: 15.12.2021
(73) Patentinhaber: Robert Bosch GmbH, 70442 Stuttgart (DE)
(72) Erfinder: Munoz Delgado, Andres Mauricio, 71263 Weil Der Stadt (DE)

(56) Entgegenhaltungen:
- DE-A1-102017 211 331
- US-A1- 2018 232 601
- US-A1- 2019 303 717
- US-A1- 2020 175 352
- M. M. MANJURUL ISLAM ET AL: "Vision-Based Autonomous Crack Detection of Concrete Structures Using a Fully Convolutional Encoder-Decoder Network", SENSORS, Bd. 19, Nr. 19, 30. Oktober 2019 (2019-10-30), Seite 4251, XP55747052, ISSN: 1424-8220, DOI: 10.3390/s19194251
- WANG TIAN ET AL: "A fast and robust convolutional neural network-based defect detection model in product quality control", THE INTERNATIONAL JOURNAL OF ADVANCED MANUFACTURING TECHNOLOGY, SPRINGER, LONDON, Bd. 94, Nr. 9, 15. August 2017 (2017-08-15), Seiten 3465-3471, XP036432221, ISSN: 0268-3768, DOI: 10.1007/S00170-017-0882-0 [gefunden am 2017-08-15]

## Beschreibung

Die vorliegende Erfindung betrifft die Kontrolle des Verhaltens trainierbarer Bildklassifikatoren, die beispielsweise für die Qualitätskontrolle von in Serie gefertigten Produkten genutzt werden können.

### Stand der Technik

Bei der Serienfertigung von Produkten ist es in der Regel erforderlich, die Qualität der Fertigung laufend zu überprüfen. Dabei wird angestrebt, Qualitätsprobleme möglichst schnell zu erkennen, um die Ursache baldmöglichst beheben zu können und nicht zu viele Einheiten des jeweiligen Produkts als Ausschuss zu verlieren.

Die optische Kontrolle der Geometrie und/oder Oberfläche eines Produkts ist schnell und zerstörungsfrei. Die WO 2018/197 074 A1 offenbart eine Prüfvorrichtung, in der ein Objekt einer Vielzahl von Beleuchtungssituationen ausgesetzt werden kann, wobei in jeder dieser Beleuchtungssituationen mit einer Kamera Bilder des Objekts aufgezeichnet werden. Aus diesen Bildern wird die Topographie des Objekts ausgewertet.

M. M. MANJURUL ISLAM ET AL: "Vision-Based Autonomous Crack Detection of Concrete Structures Using a Fully Convolutional Encoder-Decoder Network",SENSORS, Bd. 19, Nr. 19, 30. Oktober 2019 offenbart ein gegen Veränderungen eines Eingabebildes robustes Verfahren zur Klassifikation von Oberflächendefekten, welches auf einer Encoder-Decoder Architektur aufbaut. Das durch den Encoder generierte Bild gehört nicht einer anderen Klasse an.

DE 10 2017 211331 A1 (BOSCH GMBH ROBERT [DE]) 10. Januar 2019 offenbart ein Verfahren zur Messung der Empfindlichkeit eines Bildklassifikators gegen Veränderungen eines Eingabebildes. Das erzeugte Zwischenbild gehört nicht einer anderen Klasse an. Bilder des Produkts können auch unmittelbar mit einem Bildklassifikator auf der Basis künstlicher neuronaler Netzwerke einer von mehreren Klassen einer vorgegebenen Klassifikation zugeordnet werden. Auf dieser Basis kann das Produkt einer von mehreren vorgegebenen Qualitätsklassen zugeordnet werden. Im einfachsten Fall ist diese Klassifikation binär ("OK"/"nicht OK").

### Offenbarung der Erfindung

Im Rahmen der Erfindung wurde ein Verfahren zur Messung der Empfindlichkeit eines Bildklassifikators gegen Veränderungen des Eingabebildes zugeordnet.

Der Bildklassifikator ordnet ein Eingabebild einer oder mehreren Klassen einer vorgegebenen Klassifikation zu. Als Eingabebilder können beispielsweise Bilder von in Serie gefertigten, nominell identischen Produkten verwendet werden. Der Bildklassifikator kann beispielsweise darauf trainiert sein, die Eingabebilder einer oder mehreren von mindestens zwei möglichen Klassen zuzuordnen, die eine Qualitätsbeurteilung des jeweiligen Produkts repräsentieren.

Beispielsweise kann ein Produkt anhand eines Bildes binär als "OK" oder "nicht OK" (NOK) klassifiziert werden. Möglich und sinnvoll kann beispielsweise auch eine Einteilung in eine Klassifikation sein, die mehr Zwischenstufen zwischen "OK" und "nicht OK" umfasst.

Der Begriff des Bildes umfasst grundsätzlich jede in einem zwei- oder mehrdimensionalen Raster angeordnete Verteilung von Informationen. Diese Informationen können beispielsweise Intensitätswerte von Bildpixeln sein, die mit einer beliebigen Abbildungsmodalität, wie etwa mit einer optischen Kamera, mit einer Wärmebildkamera oder mit Ultraschall, aufgenommen wurden. Es können jedoch auch beliebige andere Daten, wie beispielsweise Audiodaten, Radardaten oder LIDAR-Daten, in Bilder übersetzt und dann gleichermaßen klassifiziert werden.

Bei dem Verfahren wird das Eingabebild durch mindestens einen vorgegebenen Operator auf ein Zwischenbild abgebildet, das im Vergleich zum Eingabebild einen geringeren Informationsgehalt, und/oder ein schlechteres Signal-Rausch-Verhältnis, aufweist.

Der Informationsgehalt kann beispielsweise im Sinne der Shannon'schen Informationstheorie als die minimale Anzahl unabhängiger Parameter (etwa Bits) verstanden werden, die benötigt werden, um das Bild zu charakterisieren und beispielsweise über einen Kanal zu übertragen.

So bewirkt beispielsweise das Herunterskalieren des Eingabebildes auf eine niedrigere Pixelauflösung, dass das Zwischenbild durch diese niedrigere Anzahl von Pixeln vollständig beschrieben wird. Hieran ändert sich auch nichts, wenn das Zwischenbild nach dem Herunterskalieren wieder auf die ursprüngliche Pixelauflösung des Eingabebildes hochskaliert wird. Ein Teil der in dem Eingabebild ursprünglich enthaltenen Information geht unwiederbringlich verloren.

Gleiches gilt, wenn das Eingabebild mit einem Encoder einer Autoencoder-Struktur in eine dimensionsreduzierte Repräsentation übersetzt wird. Dies gilt unabhängig davon, ob diese dimensionsreduzierte Repräsentation unmittelbar als Zwischenbild verwendet wird oder hierfür wieder in ein Bild zurückübersetzt wird, das die gleiche Pixelauflösung hat wie das ursprüngliche Eingabebild. Eine Autoencoder-Struktur kann beispielsweise einen Encoder und einen Decoder umfassen, wobei der Encoder die dimensionsreduzierte Repräsentation erzeugt und der Decoder diese Repräsentation zurückübersetzt. Der Encoder und der Decoder können dann gemeinsam trainiert werden mit dem Ziel, dass beim Zurückübersetzen ein zu dem ursprünglichen Eingabebild möglichst ähnliches Bild entsteht.

Das Weichzeichnen mindestens eines Teils des Eingabebildes führt dazu, dass die Informationen in dem Bild räumlich langsamer variieren, also bestimmte Ortsfrequenzen aus dem Bild entfernt werden. Das Bild wird also lokal oder auch global durch weniger Ortsfrequenzen beschrieben. Somit wird auch durch das Weichzeichnen der Informationsgehalt herabgesetzt.

Das Signal-Rausch-Verhältnis des Zwischenbildes im Vergleich zum Eingabebild kann beispielsweise verschlechtert werden, indem dem Zwischenbild additives und/oder multiplikatives Rauschen hinzugefügt wird.

Auch eine affine Transformation kann den Informationsgehalt des Zwischenbildes im Vergleich zum Eingabebild reduzieren. Weiterhin kann das Eingabebild auch durch einen trainierten Zwischenbild-Generator auf ein Zwischenbild mit weniger Informationsgehalt, und/oder mit schlechterem Signal-Rausch-Verhältnis, abgebildet werden. Der Zwischenbild-Generator kann beispielsweise darauf trainiert sein, aus einem Eingabebild ein Bild zu erzeugen, das mit einer schlecht in analytischen Formeln beschreibbaren Störung behaftet ist. Der Generator kann anhand von beispielhaften Bildern, die diese Störung aufweisen, lernen, diese Störung auch ganz anderen Bildern aufzuprägen.

Es wird mindestens ein Generator bereitgestellt, der darauf trainiert ist, Bilder zu erzeugen, die einerseits realistisch sind und andererseits von dem Bildklassifikator einer bestimmten vorgegebenen Klasse der vorgegebenen Klassifikation zugeordnet werden. Mit diesem Generator wird aus dem Zwischenbild eine Abwandlung des Eingabebildes erzeugt. Dabei kann dem Generator zusätzlich zu dem Zwischenbild auch zufälliges Rauschen zugeführt werden, um aus ein und demselben Zwischenbild viele Abwandlungen zu erzeugen, die vom Bildklassifikator in eine bestimmte vorgegebene Klasse einsortiert werden.

Auf diese Weise kann beispielsweise ein Eingabebild, das der Bildklassifikator der Klasse "OK" zuordnet, gezielt in eine Abwandlung umgewandelt werden, die vom Bildklassifikator der Klasse "nicht OK" zugeordnet wird. Wenn es zwischen "OK" und "nicht OK" weitere Zwischenstufen als weitere Klassen gibt, können auch aus dem gleichen Eingabebild gezielt Abwandlungen erzeugt werden, die einer dieser weiteren Klassen angehören. Dabei kann für jede Ziel-Klasse ein separater Generator zuständig sein. Es kann aber auch beispielsweise ein einziger "konditionaler" Generator verwendet werden, dem die gewünschte ZielKlasse vorgegeben werden kann.

Prinzipiell könnte man auch das Eingabebild unmittelbar einem Generator zuführen und so zu einer Abwandlung gelangen. Hinter dem Umweg über das Zwischenbild steckt die Überlegung, dass an dem ursprünglichen Eingabebild wesentlich stärkere Veränderungen vorgenommen werden müssten, um den Bildklassifikator von seinem ursprünglichen Urteil abzubringen und die Abwandlung einer anderen Klasse zuzuordnen. Diese wesentlich stärkeren Veränderungen sind nur schwer mit dem Ziel in Einklang zu bringen, dass die Abwandlung ein realistisches Bild sein soll.

Gerade für den genannten Anwendungszweck der Qualitätskontrolle ist es wichtig, dass die Abwandlung realistisch ist. Gefragt ist hier gerade nach Effekten, die bei der realen Bildaufnahme auftreten können und dazu führen, dass das Eingabebild anders klassifiziert wird.

Indem nun zunächst ein Zwischenbild mit reduziertem Informationsgehalt, und/oder mit verschlechtertem Signal-Rausch-Verhältnis, erzeugt wird, wird die Unsicherheit der Klassifikation durch den Bildklassifikator deutlich erhöht. Zugleich bewahrt das Zwischenbild noch den grundlegenden Charakter des Eingabebildes, der vor allem in den niederfrequenten Anteilen des Eingabebildes steckt. Ausgehend von diesem Zustand mit erhöhter Unsicherheit ist nur noch ein vergleichsweise kleiner Eingriff in das Bild erforderlich, um daraus eine Abwandlung zu machen, die vom Bildklassifikator einer anderen Klasse zugeordnet wird. Dieser kleine Eingriff liegt dann noch im Rahmen dessen, was in das Bild eingebracht werden kann, ohne ihm seinen realistischen Charakter zu nehmen.

In einer besonders vorteilhaften Ausgestaltung ist der Zwischenbild-Generator darauf trainiert, realistische Bilder zu erzeugen, die möglichst ähnlich zum Eingabebild sind und gleichzeitig vom Bildklassifikator mit einer möglichst großen Unsicherheit klassifiziert werden. Wie zuvor erläutert, lässt sich ausgehend hiervon mit hoher Wahrscheinlichkeit durch eine kleine Veränderung die Klasse, in die der Bildklassifikator das Zwischenbild einsortiert, ändern. Die Ähnlichkeit zum Eingabebild kann beispielsweise mit einer Kosinus-Distanz zwischen den Aktivierungen, die diese Bilder jeweils in tiefen Feature-Maps eines vortrainierten neuronalen Netzwerks hervorrufen, gemessen werden.

Die Abwandlung liefert eine unmittelbar einsichtige Information darüber, welche konkrete Veränderung im Eingabebild den Bildklassifikator dazu veranlasst, das Bild einer anderen als der bisherigen Klasse zuzuordnen. Wenn die bestimmte Klasse, der die vom Generator erzeugte Abwandlung angehört, eine andere Klasse ist als die Klasse, der das Eingabebild von dem Bildklassifikator zugeordnet wird, dann liefert ein Vergleich einer oder mehrerer Abwandlungen mit dem Eingabebild direkt diejenigen Veränderungen, die das Bild über Entscheidungsgrenzen zwischen Klassen treiben. Hieraus lässt sich die Empfindlichkeit des Bildklassifikators gegen Veränderungen des Eingabebildes sowohl qualitativ als auch quantitativ auswerten. Alternativ oder auch in Kombination hierzu kann auch eine beliebige zusammenfassende Statistik über mehrere Abwandlungen für die Bewertung der Empfindlichkeit herangezogen werden. Weiterhin kann beispielsweise auch diejenige Abwandlung, die gemäß einer Kosinus-Distanz, Feature-Clustering oder einer beliebigen anderen Metrik dem Eingabebild am nächsten ist, ermittelt werden.

Beispielsweise kann sich hierbei ergeben, dass beim Herstellungsprozess entstandene Verschmutzungen des Produkts, oder auch Lichtreflexe von der Oberfläche des Produkts bei bestimmten Lichtverhältnissen, dazu führen, dass ein einwandfreies Produkt der Klasse "nicht OK" zugeordnet und daher als Ausschuss verworfen wird.

Umgekehrt kann die Analyse beispielsweise auch ergeben, dass bestimmte Mängel bei der physikalischen Bildaufnahme in der Qualitätskontrolle, wie etwa eine schlechte Tiefenschärfe der verwendeten Kamera oder eine zu schwache Ausleuchtung, dazu führen, dass ein Bild eines mangelhaften Produkts der Klasse "OK" zugeordnet wird und das mangelhafte Produkt somit fälschlicherweise die Qualitätskontrolle besteht. In einem eingespielten Fertigungsprozess, der große Mengen einwandfreier Produkte liefert, zeigen sich Qualitätsmängel einzelner Produkte mit hoher Wahrscheinlichkeit an klar abgrenzbaren Einzelschäden. Beispielsweise kann sich ein Kratzer über die Oberfläche ziehen, oder an einer bestimmten Stelle kann eine Beschichtung abgeplatzt sein. Wenn solche Schäden durch eine schlechte Bildqualität unkenntlich gemacht werden, wird das mangelhafte Produkt möglicherweise nicht als solches erkannt.

Um speziell Problemen bei der Bildaufnahme auf den Grund gehen zu können, wird in einer weiteren besonders vorteilhaften Ausgestaltung zusätzlich der Operator für die Erzeugung des Zwischenbildes variiert, und es wird die Abhängigkeit der Empfindlichkeit von dem Operator ausgewertet. Der Operator kann beispielsweise durch Parameter charakterisiert sein, die variiert werden können. Bei dieser Analyse kann sich beispielsweise herausstellen, dass eine minimal schlechtere Tiefenschärfe bereits die Erkennung vieler Fehler deutlich verschlechtert, während diese Erkennung auch bei einer deutlich schlechteren Beleuchtungssituation noch funktioniert.

Schließlich kann beispielsweise auch erkannt werden, ob der Bildklassifikator Entscheidungen möglicherweise gar nicht auf der Basis von relevanten Features des Bildes trifft, sondern auf der Basis anderer Features. Sind beispielsweise bei der Qualitätskontrolle Features des eigentlichen Produkts schlecht zu erkennen, könnte der Bildklassifikator darauf ausweichen, stattdessen den Roboterarm, der das Produkt in die Kamera hält, zu begutachten.

In einer weiteren besonders vorteilhaften Ausgestaltung wird in Antwort darauf, dass die ermittelte Empfindlichkeit des Bildklassifikators ein vorgegebenes Kriterium erfüllt, ein Produkt, auf das sich das Eingabebild bezieht, für eine manuelle Nachkontrolle vorgemerkt, und/oder es wird eine Fördereinrichtung angesteuert, um dieses Produkt aus dem Produktionsprozess abzusondern. Dann kann ein erheblicher technischer Zusatzaufwand für die Aufnahme und Auswertung von Bildern im Rahmen der automatisierten Qualitätskontrolle eingespart werden, der ansonsten notwendig wäre, um auch alle Zweifelsfälle und Grenzfälle automatisiert abklären zu können. Die manuelle Nachkontrolle einiger weniger Exemplare eines in großer Stückzahl gefertigten Produkts kann wirtschaftlich deutlich günstiger sein als die Steigerung der Trefferquote bei der automatisierten Qualitätskontrolle auf ein Maß, bei dem die nachzukontrollierenden Zweifelsfälle komplett wegfallen würden.

Die in der beschriebenen Weise erzeugten Abwandlungen können nicht nur genutzt werden, um in Bezug auf die Empfindlichkeit des Bildklassifikators gegen Veränderungen des Eingabebildes den Status quo zu messen. Vielmehr können sie auch genutzt werden, um das Training des Bildklassifikators zu verbessern und so insbesondere die Erkennungsleistung nahe der Entscheidungsgrenze zu schärfen. Daher wird in einer weiteren vorteilhaften Ausgestaltung die Abwandlung als weiteres Trainingsbild für das Training des Bildklassifikators verwendet. Diese Trainingsbilder können beispielsweise manuell mit derjenigen Klasse gelabelt werden, der sie vom Bildklassifikator zugeordnet werden sollen. Dies muss nicht die gleiche Klasse sein, der auch das Eingabebild zugeordnet wurde.

Die Erfindung bezieht sich auch auf ein Verfahren zum Trainieren eines Generators für die Verwendung in dem zuvor beschriebenen Verfahren. Bei diesem Verfahren wird eine Vielzahl von Trainingsbildern bereitgestellt, wobei für diese Trainingsbilder nicht zwingend bekannt sein muss, in welche Klasse der Bildklassifikator welches Trainingsbild nominell klassifizieren sollte. Aus den Trainingsbildern werden jeweils wie zuvor beschrieben Zwischenbilder erzeugt.

Es werden nun Parameter, die das Verhalten des Generators charakterisieren, auf das Ziel optimiert, dass die vom Generator erzeugten Abwandlungen durch den Bildklassifikator einer vorgegebenen Klasse zugeordnet werden und zugleich zu Trainingsbildern ähnlich sind. Dabei kann diese Ähnlichkeit jeweils wahlweise zu allen Trainingsbildern gemessen werden oder nur zu Trainingsbildern, die der Bildklassifikator der gleichen Klasse zuordnet wie die vom Generator zu erzeugenden Abwandlungen.

Dabei kann die Zuordnung zu der bestimmten vorgegebenen Klasse, der die Abwandlung vom Bildklassifikator zugeordnet werden soll, mit einer beliebigen Metrik quantitativ gemessen werden. Beispielsweise kann der Unterschied zwischen dem tatsächlichen Klassifikations-Score und dem gewünschten Klassifikations-Score in Bezug auf die vorgegebene Klasse mit einer beliebigen Norm gemessen werden.

Die Ähnlichkeit der Abwandlung zu Trainingsbildern kann besonders vorteilhaft daran gemessen werden, inwieweit ein gleichzeitig oder im Wechsel mit dem Generator trainierter Diskriminator in der Lage ist, die Abwandlung von den Trainingsbildern zu unterscheiden. Die Basis für diesen Vergleich kann wahlweise die Mannigfaltigkeit aller Trainingsbilder oder die Mannigfaltigkeit nur derjenigen Trainingsbilder, die der Bildklassifikator der gleichen Klasse zuordnet wie die vom Generator zu erzeugenden Abwandlungen, sein. Generator und Diskriminator bilden während des Trainings ein Generative Adversarial Network, GAN, von dem bei der Messung der Empfindlichkeit nach Abschluss des Trainings nur noch der Generator weiter verwendet wird.

In einer weiteren besonders vorteilhaften Ausgestaltung wird derjenige Generator, der Bilder aus derjenigen Klasse erzeugt, der der Bildklassifikator auch das Trainingsbild zuordnet, zusätzlich darauf trainiert, dass die Abwandlung möglichst ähnlich zu dem Trainingsbild ist. Auf diese Weise ist sichergestellt, dass die Generatoren nicht lediglich die Erzeugung von Abwandlungen "aus dem Nichts" (d.h. aus Rauschen) lernen, sondern die Rekonstruktion konkreter Eingabebilder. Für dieses Training können beispielsweise "Batches" von Eingabebildern zusammengestellt werden, die der Bildklassifikator jeweils der gleichen Klasse zuordnet.

Sofern ein Zwischenbild-Generator für die Erzeugung von Zwischenbildern verwendet wird, kann dieser insbesondere beispielsweise gleichzeitig oder im Wechsel mit dem Generator trainiert werden. Es können dann beispielsweise in einer gemeinsamen Kostenfunktion für das Training die Wünsche, dass
- jeder Generator Abwandlungen erzeugt, die vom Bildklassifikator auch tatsächlich in die gewünschte Zielklasse eingeordnet werden;
- jeder Generator Abwandlungen erzeugt, die sich von Trainingsbildern generell, oder von Trainingsbildern der gewünschten Zielklasse, nur schwer unterscheiden lassen;
- jeder Generator Eingabebilder, die vom Bildklassifikator die gewünschte Zielklasse eingeordnet werden, optimal rekonstruiert;
- der Zwischenbild-Generator realistische Bilder erzeugt, die möglichst ähnlich zum Eingabebild sind oder zumindest den grundlegenden Charakter des Eingabebildes noch wahren; und
- die vom Zwischenbild-Generator erzeugten Bilder gleichzeitig vom Bildklassifikator mit einer möglichst großen Unsicherheit klassifiziert werden,

in einer beliebigen (optional durch Hyperparameter festgelegten) Gewichtung in einer Kostenfunktion (Loss-Funktion) zusammengefasst werden. Das Training der Generatoren, sowie optional des Zwischenbild-Generators, kann dann mit einem beliebigen Optimierungsverfahren, wie beispielsweise ADAM oder Gradientenabstieg, anhand dieser Kostenfunktion erfolgen.

Die Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zur Messung der Empfindlichkeit 2* eines Bildklassifikators 2;
Figur 2 Beispielhafte Umklassifikation der Abwandlung 7 eines Eingabebildes 1;
Figur 3 Ausführungsbeispiel des Verfahrens 200 zum Trainieren eines Generators 6.

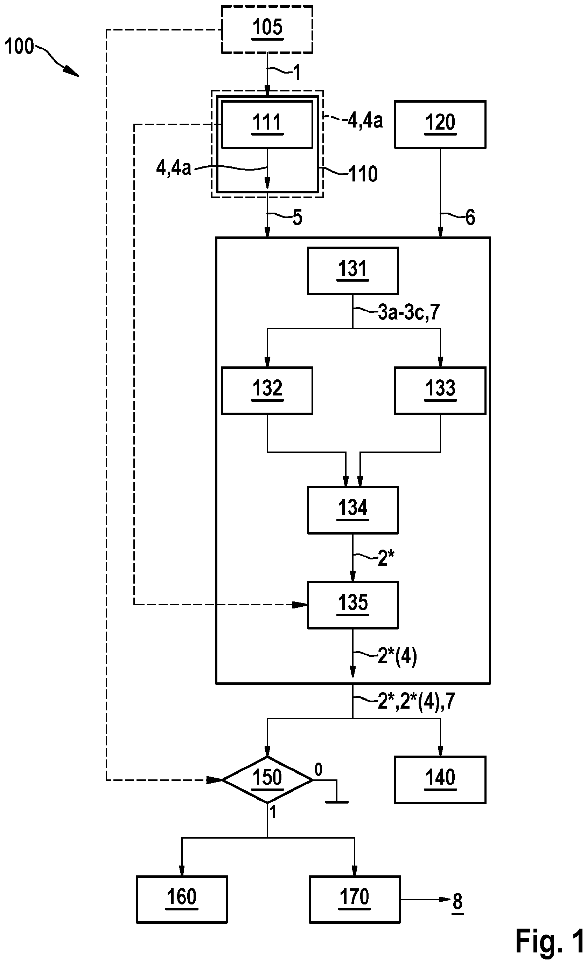

Figur 1 ist ein schematisches Ablaufdiagramm eines Ausführungsbeispiels des Verfahrens 100 zur Messung der Empfindlichkeit 2* eines Bildklassifikators 2 gegen Veränderungen des Eingabebildes 1. Als Eingabebilder 1 können gemäß Schritt 105 insbesondere beispielsweise Bilder von in Serie gefertigten, nominell identischen Produkten gewählt werden. Der Bildklassifikator 2 kann dann darauf trainiert sein, die Eingabebilder 1 in Klassen 3a-3c einer vorgegebenen Klassifikation einzuteilen, die eine Qualitätsbeurteilung des jeweiligen Produkts repräsentieren.

In Schritt 110 wird das Eingabebild 1 durch den vorgegebenen Operator 4, der insbesondere ein trainierter Zwischenbild-Generator 4a sein kann, auf ein Zwischenbild 5 abgebildet. Dieses Zwischenbild 5 hat im Vergleich zum Eingabebild 1 einen geringeren Informationsgehalt, und/oder ein schlechteres Signal-Rausch-Verhältnis. In Schritt 120 wird mindestens ein Generator 6 bereitgestellt. Dieser Generator 6 ist darauf trainiert, realistische Bilder zu erzeugen, die von dem Bildklassifikator 2 einer bestimmten Klasse 3a-3c der vorgegebenen Klassifikation zugeordnet werden.

Insbesondere kann für jede Klasse 3a-3c ein separater Generator 6 vorgesehen sein. Es gibt jedoch auch Anwendungen, in denen ein einziger Generator 6 ausreicht. Beispielsweise kann lediglich danach gefragt sein, warum Produkte in die schlechteste der Qualitätsklassen 3a-3c eingestuft und für die Aussonderung vorgesehen werden. Ein einziger Generator 6 kann dann realistische Bilder erzeugen, die der Bildklassifikator 2 in diese schlechteste Qualitätsklasse 3a-3c einstuft.

Mit dem Generator 6 wird aus dem Zwischenbild 5 in Schritt 130 eine Abwandlung 7 des Eingabebildes 1 erzeugt. Hierbei kann es sich insbesondere beispielsweise gemäß Block 131 um eine Abwandlung 7 handeln, die vom Bildklassifikator 2 in eine andere Klasse 3a-3c eingestuft wird als das ursprüngliche Eingabebild 1. Die Abwandlung 7 basiert dann noch erkennbar auf dem ursprünglichen Eingabebild 1, ist aber so verändert, dass die Entscheidungsgrenze des Bildklassifikators 2 zwischen zwei Klassen überschritten wird. Hierin ist unmittelbar die Empfindlichkeit 2* des Bildklassifikators 2 gegenüber Veränderungen des Eingabebildes 1 verkörpert.

Die Empfindlichkeit 2* wird gemäß Block 134 aus einem Vergleich 132 einer oder mehrerer Abwandlungen 7 mit dem Eingabebild 1, und/oder aus einer zusammenfassenden Statistik 133 über mehrere Abwandlungen 7, ausgewertet. Es kann dann noch zusätzlich gemäß Block 111 der Operator 4 für die Erzeugung des Zwischenbildes 5 variiert werden, so dass gemäß Block 135 die Abhängigkeit der Empfindlichkeit 2* des Bildklassifikators 2 von dem Operator 4 ausgewertet werden kann. Wie zuvor erläutert, kann hiermit insbesondere bewertet werden, welche den Informationsgehalt reduzierenden Maßnahmen, bzw. welche Art und Stärke von Rauschen, sich besonders ungünstig auf die Klassifizierung durch den Bildklassifikator 2 auswirken.

Die Abwandlung 7 kann aber nicht nur als Maß für die Empfindlichkeit 2* verwendet werden, sondern in Schritt 140 zusätzlich als weiteres Trainingsbild für das Training des Bildklassifikators 2 genutzt werden. Trainingsbilder, die nahe an der Entscheidungsgrenze des Bildklassifikators 2 liegen, eignen sich besonders gut dazu, diese Entscheidungsgrenze zu schärfen.

In Schritt 150 kann geprüft werden, ob die ermittelte Empfindlichkeit 2* des Bildklassifikators 2, eventuell auch ausgedrückt als Abhängigkeit 2*(4) dieser Empfindlichkeit 2* vom Operator 4, ein vorgegebenes Kriterium erfüllt. Ist dies der Fall (Wahrheitswert 1), kann beispielsweise in Schritt 160 das Produkt, auf das sich das Eingabebild 1 bezieht, für eine manuelle Nachkontrolle vorgemerkt werden. Alternativ oder auch in Kombination hierzu kann in Schritt 170 eine Fördereinrichtung 8 angesteuert werden, um dieses Produkt aus dem Produktionsprozess abzusondern.

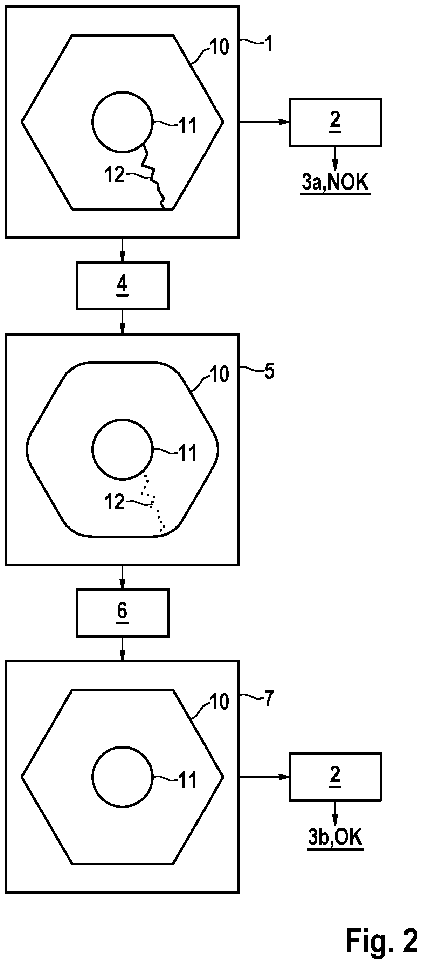

Figur 2 zeigt beispielhaft, wie eine Abwandlung 7 eines Eingabebildes 1 durch Erzeugen des informationsreduzierten Zwischenbildes 5 und anschließende Rekonstruktion mit dem Generator 6 dazu führen kann, dass die Abwandlung 7 von dem Bildklassifikator 2 in eine andere Klasse 3a-3c eingestuft wird als das ursprüngliche Eingabebild 1.

Das Eingabebild 1 zeigt eine Schraubenmutter 10 in Form eines regelmäßigen Sechsecks mit einem Innengewinde 11 in der Mitte. Auf Grund eines Material- oder Fabrikationsfehlers erstreckt sich ein Riss 12 vom Außenumfang des Innengewindes 11 bis zum äußeren Rand der Schraubenmutter 10. Wird dieses Eingabebild 1 dem Bildklassifikator 2 zugeführt, wird es in die Klasse 3a eingestuft, die dem Qualitätsurteil "nicht OK" (NOK) entspricht.

Wird das Eingabebild hingegen durch den Weichzeichnungsoperator 4 in ein informationsreduziertes Zwischenbild 5 verwandelt, sind die Ecken der Schraubenmutter 10 abgerundet. Die Grundform des Sechsecks lässt sich noch erkennen. Jedoch hat das Weichzeichnen dazu geführt, dass der Riss 12 nur noch stark abgeschwächt sichtbar ist.

Der Generator 6 ist darauf trainiert, realistische Bilder zu erzeugen, die vom Bildklassifikator 2 in die Klasse 3b eingeteilt werden, die dem Qualitätsurteil "OK" entspricht. Wenn diesem Generator 6 das Zwischenbild 5 zugeführt wird, verschwindet auch der letzte im Zwischenbild 5 noch erkennbare Rest des Risses 12.

Der Vergleich der Abwandlung 7 mit dem ursprünglichen Eingabebild 1 ergibt, dass der Riss 12 den Unterschied zwischen einer Einteilung in die Klasse 3a = "NOK" und einer Einteilung in die Klasse 3b = "OK" macht.

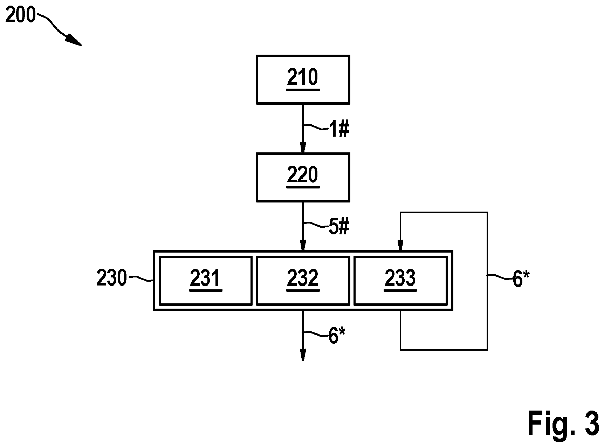

Figur 3 ist ein schematisches Ablaufdiagramm eines Ausführungsbeispiels des Verfahrens 200 zum Trainieren eines Generators 6. In Schritt 210 wird eine Vielzahl von Trainingsbildern 1# bereitgestellt. In Schritt 230 werden aus diesen Trainingsbildern 1# mit mindestens einem vorgegebenen Operator 4 jeweils Zwischenbilder 5# erzeugt.

In Schritt 230 werden Parameter 6*, die das Verhalten des Generators 6 charakterisieren, auf das Ziel optimiert, dass die vom Generator 6 erzeugten Abwandlungen 7 durch den Bildklassifikator 2 einer vorgegebenen Klasse 3a-3c zugeordnet werden und zugleich zu Trainingsbildern 1# ähnlich sind.

Dabei kann gemäß Block 231 die Ähnlichkeit der Abwandlung 7 zu Trainingsbildern 1# daran gemessen werden, inwieweit ein gleichzeitig oder im Wechsel mit dem Generator 6 trainierter Diskriminator in der Lage ist, die Abwandlung 7 von Trainingsbildern 1# zu unterscheiden.

Gemäß Block 232 kann derjenige Generator 6, der Bilder aus derjenigen Klasse 3a-3c erzeugt, in die der Bildklassifikator 2 auch das Trainingsbild 1# einteilt, zusätzlich darauf trainiert werden, dass die Abwandlung 7 möglichst ähnlich zu dem Trainingsbild 1# ist.

Gemäß Block 233 kann ein Zwischenbild-Generator 4a, der Zwischenbilder 5 erzeugt, gleichzeitig oder im Wechsel mit dem Generator 6 trainiert werden.

Die Optimierung der Parameter 6* kann fortgesetzt werden, bis ein beliebiges Abbruchkriterium erfüllt ist. Der fertig trainierte Zustand der Parameter 6* charakterisiert den fertigen Generator 6.

## Patentansprüche

1. Computerimplementiertes Verfahren (100) zur Messung der Empfindlichkeit (2*) eines Bildklassifikators (2), der ein Eingabebild (1) einer oder mehreren Klassen (3a-3c) einer vorgegebenen Klassifikation zuordnet, gegen Veränderungen des Eingabebildes (1), mit den Schritten:
• das Eingabebild (1) wird durch mindestens einen vorgegebenen Operator (4) auf ein Zwischenbild (5) abgebildet (110), das im Vergleich zum Eingabebild (1) einen geringeren Informationsgehalt, und/oder ein schlechteres Signal-Rausch-Verhältnis, aufweist;
• es wird mindestens ein Generator (6) bereitgestellt (120), der darauf trainiert ist, realistische Bilder zu erzeugen, die von dem Bildklassifikator (2) einer bestimmten Klasse (3a-3c) der vorgegebenen Klassifikation zugeordnet werden;
• mit diesem Generator (6) wird aus dem Zwischenbild (5) eine Abwandlung (7) des Eingabebildes (1) erzeugt (130),
wobei die bestimmte Klasse (3a-3c), der die vom Generator (6) erzeugte Abwandlung (7) angehört, eine andere Klasse (3a-3c) ist als die Klasse (3a-3c), der das Eingabebild (1) von dem Bildklassifikator (2) zugeordnet wird (131), und wobei
• aus einem Vergleich (132) einer oder mehrerer Abwandlungen (7) mit dem Eingabebild (1), und/oder
• aus einer zusammenfassenden Statistik (133) über mehrere Abwandlungen (7),
die Empfindlichkeit (2*) des Bildklassifikators (2) gegen Veränderungen des Eingabebildes (1) ausgewertet wird (134).

2. Verfahren (100) nach Anspruch 1, wobei der vorgegebene Operator (4)
• das Herunterskalieren des Eingabebildes (1) auf eine niedrigere Pixelauflösung; und/oder
• das Erzeugen einer dimensionsreduzierten Repräsentation des Eingabebildes (1) mit einem Encoder einer Autoencoder-Struktur, und/oder
• das Hinzufügen additiven und/oder multiplikativen Rauschens; und/oder
• das Weichzeichnen mindestens eines Teils des Eingabebildes; und/oder
• mindestens eine affine Transformation, und/oder
• einen weiteren trainierten Zwischenbild-Generator (4a) umfasst.

3. Verfahren (100) nach Anspruch 2, wobei der Zwischenbild-Generator (4a) darauf trainiert ist, realistische Bilder zu erzeugen, die möglichst ähnlich zum Eingabebild (1) sind und gleichzeitig vom Bildklassifikator (2) mit einer möglichst großen Unsicherheit klassifiziert werden.

4. Verfahren (100) nach einem der Ansprüche 1 bis 3, wobei zusätzlich der Operator (4) für die Erzeugung des Zwischenbildes (5) variiert wird (111) und wobei die Abhängigkeit der Empfindlichkeit (2*) des Bildklassifikators (2) von dem Operator (4) ausgewertet wird (135).

5. Verfahren (100) nach einem der Ansprüche 1 bis 4, wobei die Abwandlung (7) als weiteres Trainingsbild für das Training des Bildklassifikators (2) verwendet wird (140).

6. Verfahren (100) nach einem der Ansprüche 1 bis 5, wobei Bilder von in Serie gefertigten, nominell identischen Produkten als Eingabebilder (1) gewählt werden (105) und wobei der Bildklassifikator (2) darauf trainiert ist, die Eingabebilder (2a-3c) einer oder mehreren von mindestens zwei möglichen Klassen (3a-3c) zuzuordnen, die eine Qualitätsbeurteilung des jeweiligen Produkts repräsentieren.

7. Verfahren (100) nach Anspruch 6, wobei in Antwort darauf, dass die ermittelte Empfindlichkeit (2*) des Bildklassifikators (2) ein vorgegebenes Kriterium erfüllt (150), ein Produkt, auf das sich das Eingabebild (1) bezieht, für eine manuelle Nachkontrolle vorgemerkt wird (160), und/oder eine Fördereinrichtung (8) angesteuert wird (170), um dieses Produkt aus dem Produktionsprozess abzusondern.

8. Verfahren (200) zum Trainieren eines Generators (6) für die Verwendung in dem Verfahren (100) nach einem der Ansprüche 1 bis 7 mit den Schritten:
• es wird eine Vielzahl von Trainingsbildern (1#) bereitgestellt (210);
• aus diesen Trainingsbildern (1#) werden mit mindestens einem vorgegebenen Operator (4) jeweils Zwischenbilder (5#) erzeugt (220);
• Parameter (6*), die das Verhalten des Generators (6) charakterisieren, werden auf das Ziel optimiert (230), dass die vom Generator (6) erzeugten Abwandlungen (7) durch den Bildklassifikator (2) einer vorgegebenen Klasse (3a-3c) zugeordnet werden und zugleich zu Trainingsbildern (1#) möglichst ähnlich sind.

9. Verfahren (200) nach Anspruch 8, wobei die Ähnlichkeit der Abwandlung (7) zu Trainingsbildern (1#) daran gemessen wird (231), inwieweit ein im Wechsel mit dem Generator (6) trainierter Diskriminator in der Lage ist, die Abwandlung (7) von Trainingsbildern (1#) zu unterscheiden.

10. Verfahren (200) nach einem der Ansprüche 8 bis 9, wobei ein Zwischenbild-Generator (4a), der Zwischenbilder (5) erzeugt, gleichzeitig oder im Wechsel mit dem Generator (6) trainiert wird (233).

11. Computerprogramm, enthaltend maschinenlesbare Anweisungen, die, wenn sie auf einem oder mehreren Computern ausgeführt werden, den oder die Computer dazu veranlassen, ein Verfahren (100, 200) nach einem der Ansprüche 1 bis 10 auszuführen.

12. Maschinenlesbarer Datenträger mit dem Computerprogramm nach Anspruch 11.

13. Computer, ausgerüstet mit dem Computerprogramm nach Anspruch 11, und/oder mit dem maschinenlesbaren Datenträger nach Anspruch 12.

## Claims

1. Computer-implemented method (100) for measuring the sensitivity (2*) of an image classifier (2), which assigns an input image (1) to one or more classes (3a-3c) of a given classification, to changes in the input image (1), including the following steps:
• the input image (1) is mapped (110) by means of at least one given operator (4) onto an intermediate image (5) which, in comparison with the input image (1), has less informative content and/or a worse signal-to-noise ratio;
• at least one generator (6) is provided (120), said generator being trained to create realistic images which are assigned to a specific class (3a-3c) of the given classification by the image classifier (2);
• a modification (7) of the input image (1) is generated (130) from the intermediate image (5) using this generator (6),
wherein the specific class (3a-3c) to which the modification (7) created by the generator (6) belongs is a different class (3a-3c) than the class (3a-3c) to which the input image (1) is assigned (131) by the image classifier (2), and wherein
• a comparison (132) of one or more modifications (7) with the input image (1) and/or
• a summarizing statistic (133) regarding a plurality of modifications (7)
is/are used to evaluate (134) the sensitivity (2*) of the image classifier (2) to changes in the input image (1).

2. Method (100) according to Claim 1, wherein the given operator (4) comprises
• downscaling the input image (1) to a lower pixel resolution; and/or
• generating a dimensionally reduced representation of the input image (1) using an encoder of an auto encoder structure, and/or
• adding additive and/or multiplicative noise; and/or
• blurring at least one part of the input image; and/or
• at least affine transformation, and/or
• a further trained intermediate image generator (4a).

3. Method (100) according to Claim 2, wherein the intermediate image generator (4a) is trained to create realistic images which are as similar as possible to the input image (1) and at the same time are classified with the greatest possible uncertainty by the image classifier (2) .

4. Method (100) according to any of Claims 1 to 3, wherein the operator (4) for creating the intermediate image (5) is additionally varied (111) and wherein the dependence of the sensitivity (2*) of the image classifier (2) on the operator (4) is evaluated (135).

5. Method (100) according to any of Claims 1 to 4, wherein the modification (7) is used (140) as further training image for training the image classifier (2).

6. Method (100) according to any of Claims 1 to 5, wherein images of series-produced, nominally identical products are chosen (105) as input images (1) and wherein the image classifier (2) is trained to assign the input images (2a-3c) to one or more of at least two possible classes (3a-3c) which represent a quality assessment for the respective product.

7. Method (100) according to Claim 6, wherein in response to the ascertained sensitivity (2*) of the image classifier (2) meeting a specified criterion (150), a product related to the input image (1) is put down (160) for a manual follow-up check and/or a conveying device (8) is controlled (170) to remove this product from the production process.

8. Method (200) for training a generator (6) for use in the method (100) according to any of Claims 1 to 7, including the following steps:
• a multiplicity of training images (1#) are provided (210);
• respective intermediate images (5#) are generated (220) from these training images (1#) using at least one given operator (4);
• parameters (6*) which characterize the behaviour of the generator (6) are optimized (230) with regard to the goal of the modifications (7) created by the generator (6) being assigned to a given class (3a-3c) by the image classifier (2) and simultaneously being as similar as possible to training images (1#).

9. Method (200) according to Claim 8, wherein the similarity of the modification (7) to training images (1#) is measured (231) on the basis of the extent to which a discriminator trained in alternation with the generator (6) is able to distinguish between the modification (7) and training images (1#).

10. Method (200) according to either of Claims 8 and 9, wherein an intermediate image generator (4a) which creates intermediate images (5) is trained (233) simultaneously or in alternation with the generator (6).

11. Computer program containing machine-readable instructions which, when executed on one or more computers, cause the computer or computers to carry out a method (100, 200) according to any of Claims 1 to 10.

12. Machine-readable data carrier having the computer program according to Claim 11.

13. Computer equipped with the computer program according to Claim 11 and/or with the machine-readable data carrier according to Claim 12.

## Revendications

1. Procédé (100) mis en œuvre par ordinateur, permettant de mesurer la sensibilité (2*) d'un classificateur d'image (2) qui attribue une image d'entrée (1) à une ou plusieurs classes (3a-3c) d'une classification prédéfinie, quant à des modifications de l'image d'entrée (1), comprenant les étapes suivantes :
• l'image d'entrée (1) est reproduite (110) par au moins un opérateur prédéfini (4) sur une image intermédiaire (5) qui présente en comparaison avec l'image d'entrée (1) un contenu d'information inférieur et/ou un rapport signal/bruit moins bon ;
• au moins un générateur (6) est fourni (120) qui a été entraîné pour générer des images réalistes qui sont attribuées par le classificateur d'image (2) à une classe déterminée (3a-3c) de la classification prédéfinie ;
• ce générateur (6) génère (130) à partir de l'image intermédiaire (5) une variante (7) de l'image d'entrée (1),
dans lequel la classe déterminée (3a-3c) à laquelle appartient la variante (7) générée par le générateur (6) est une classe (3a-3c) différente de la classe (3a-3c) à laquelle l'image d'entrée (1) est attribuée (131) par le classificateur d'image (2), et dans lequel
• à partir d'une comparaison (132) d'une ou de plusieurs variantes (7) avec l'image d'entrée (1), et/ou
• à partir d'une statistique (133) résumant plusieurs variantes (7),
la sensibilité (2*) du classificateur d'image (2) est évaluée (134) quant à des modifications de l'image d'entrée (1).

2. Procédé (100) selon la revendication 1, dans lequel l'opérateur prédéfini (4) comprend
• le rééchantillonnage de l'image d'entrée (1) avec une résolution de pixels inférieure ; et/ou
• la génération d'une représentation à dimensions réduites de l'image d'entrée (1) à l'aide d'un codeur d'une structure d'auto-encodeur, et/ou
• l'ajout d'un bruit additif et/ou multiplicatif ; et/ou
• le floutage d'au moins une partie de l'image d'entrée ; et/ou
• au moins une transformation affine, et/ou
• un autre générateur d'image intermédiaire entraîné (4a) .

3. Procédé (100) selon la revendication 2, dans lequel le générateur d'image intermédiaire (4a) a été entraîné pour générer des images réalistes qui ressemblent dans la mesure du possible à l'image d'entrée (1) tout en étant classifiées par le classificateur d'image (2) avec une incertitude aussi élevée que possible.

4. Procédé (100) selon l'une quelconque des revendications 1 à 3, dans lequel de plus, l'opérateur (4) varie (111) pour la génération de l'image intermédiaire (5), et dans lequel la dépendance de la sensibilité (2*) du classificateur d'image (2) est évaluée (135) par l'opérateur (4).

5. Procédé (100) selon l'une quelconque des revendications 1 à 4, dans lequel la variante (7) est utilisée (140) comme une image d'entraînement supplémentaire pour l'entraînement du classificateur d'image (2).

6. Procédé (100) selon l'une quelconque des revendications 1 à 5, dans lequel des images de produits fabriqués en série, nominalement identiques, sont sélectionnées (105) comme images d'entrée (1), et dans lequel le classificateur d'image (2) est entraîné pour attribuer les images d'entrée (2a-3c) à une ou plusieurs d'au moins deux classes (3a-3c) possibles qui représentent un jugement de qualité du produit respectif.

7. Procédé (100) selon la revendication 6, dans lequel, en réponse au fait que la sensibilité établie (2*) du classificateur d'image (2) satisfait (150) un critère prédéfini, un produit auquel se réfère l'image d'entrée (1) est retenu (160) pour un suivi, et/ou un moyen de transport (8) est piloté (170) pour isoler ce produit du processus de production.

8. Procédé (200) permettant d'entraîner un générateur (6) destiné à être utilisé dans le procédé (100) selon l'une quelconque des revendications 1 à 7, comprenant les étapes suivantes :
• une pluralité d'images d'entraînement (1#) est fournie (210) ;
• à partir de ces images d'entraînement (1#), des images intermédiaires (5#) sont générées (220) respectivement par au moins un opérateur (4) prédéfini ;
• des paramètres (6*) qui caractérisent le comportement du générateur (6) sont optimisés (230) pour l'objectif que les variantes (7) générées par le générateur (6) soient attribuées par le classificateur d'image (2) à une classe prédéfinie (3a-3c) tout en ressemblant aussi bien que possible aux images d'entraînement (1#).

9. Procédé (200) selon la revendication 8, dans lequel la similitude de la variante (7) avec les images d'entraînement (1#) est mesurée (231) par la mesure dans laquelle un discriminateur entraîné en alternance avec le générateur (6) est capable de discriminer la variante (7) par rapport aux images d'entraînement (1#).

10. Procédé (200) selon l'une quelconque des revendications 8 à 9, dans lequel un générateur d'image intermédiaire (4a) qui génère des images intermédiaires (5) est entraîné (233) en même temps ou en alternance avec le générateur (6).

11. Programme informatique contenant des instructions lisibles par machine qui, lorsqu'elles sont exécutées sur un ou plusieurs ordinateurs, font que le ou les ordinateurs exécutent un procédé (100, 200) selon l'une quelconque des revendications 1 à 10.

12. Support de données lisible par machine, comprenant le programme informatique selon la revendication 11.

13. Ordinateur, équipé du programme informatique selon la revendication 11 et ou du support de données lisible par machine selon la revendication 12.
